# EUROPEAN PATENT SPECIFICATION

(11) **EP 1 561 084 B1**
(45) Date of publication and mention of the grant of the patent: **16.01.2013**
(21) Application number: 03776980.9
(22) Date of filing: 11.11.2003
(51) Int. Cl.: G01B 11/25, G02B 27/08

(54) **STRUCTURED LIGHT PROJECTOR**
PROJEKTOR FÜR STRUKTURIERTES LICHT
PROJECTEUR DE LUMIERE STRUCTUREE

(30) Priority: 11.11.2002 GB 0226241
(43) Date of publication of application: 10.08.2005
(73) Proprietor: QinetiQ Limited, Farnborough Hampshire GU14 0LX (GB)
(72) Inventor: ORCHARD, David, Arthur, Malvern, Worcestershire WR14 3PS (GB); LEWIN, Andrew, Charles, Malvern, Worcestershire WR14 3PS (GB)
(74) Representative: Day, Caroline Margaret
(86) International application number: PCT/GB2003/004858
(87) International publication number: WO 2004/044523

(56) References cited:
- EP-A2- 0 994 342
- WO-A-02/40940
- WO-A1-88/09947
- DE-A- 4 304 815
- FR-A1- 2 585 853
- GB-A- 2 228 344
- GB-A- 181 704 136
- JP-A- 62 007 019
- JP-A- 2002 323 670
- US-A- D 265 095
- US-A- 5 825 476
- US-B1- 6 318 863
- GOURLAY P M ET AL: "COHERENT KALEIDOSCOPE. II. EXPERIMENTAL OBSERVATIONS OF SIBLING-SPOT FORMATION IN HOLLOW AND SOLID, SQUARE AND RECTANGULAR WAVEGUIDES", APPLIED OPTICS, OPTICAL SOCIETY OF AMERICA, WASHINGTON, DC; US, vol. 33, no. 3, 20 January 1994 (1994-01-20), pages 384-396, XP000425016, ISSN: 0003-6935, DOI: 10.1364/AO.33.000384
- MYER J H: "Zoomable kaleidoscopic mirror tunnel", APPLIED OPTICS USA, vol. 10, no. 9, September 1971 (1971-09), pages 2179-2182, ISSN: 0003-6935
- ART YOUNGQUIST: "Slide Projector with Kaleidoscope Attachment", POPULAR MECHANICS, HEARST COMMUNICATIONS INC., NEW YORK, NY, US, 1 September 1964 (1964-09-01), pages 180-198, XP008127582, ISSN: 0032-4558
- JAY M: "Light as art and entertainment", LIGHT AND LIGHTING, CHARTERED INSTITUTION OF BUILDING SERVICES, LONDON, GB, vol. 61, no. 2, 1 February 1968 (1968-02-01), pages 35-43, XP008127490, ISSN: 0024-3302
- BRYNGDAHL O: "IMAGE FORMATION USING SELF-IMAGING TECHNIQUES", JOURNAL OF THE OPTICAL SOCIETY OF AMERICA, OPTICAL SOCIETY OF AMERICA, US, vol. 63, no. 4, 1 April 1973 (1973-04-01), pages 416-419, XP001153366, ISSN: 0030-3941
- CHEN M M ET AL: "The use of a kaleidoscope to obtain uniform fluxover a large area in a solar or arc imaging furnace", APPLIED OPTICS USA, vol. 2, no. 3, March 1963 (1963-03), pages 265-271,
- FROST B S ET AL: "COHERENT KALEIDOOOSCOPE. ÖI. INTERFERENCE EFFECTS IN A RECTANGULAR WAVEGUIDE WITH POINT-SOURCE INPUT", APPLIED OPTICS, OPTICAL SOCIETY OF AMERICA, WASHINGTON, DC; US, vol. 33, no. 3, 20 January 1994 (1994-01-20), pages 373-383, XP000508246, ISSN: 0003-6935, DOI: 10.1364/AO.33.000373

## Description

This invention relates to a structured light generator for illuminating a scene which is adapted to be used with a range finding apparatus such as an imaging range finding system.

Imaging range finding systems often illuminate a scene and image the light reflected from the scene to determine range information.

One known system, a so called triangulation system, uses a source arranged to illuminate a scene with a beam of light such that a spot appears in the scene. A detector is oriented in a predetermines fashion with respect to the source such that the position of the spot of light in the scene reveals range information. The beam of light may be scanned in both azimuth and elevation across the scene to generate range information from across the whole scene. In some systems the beam of light may be a linear beam such that one-dimensional range information is gathered simultaneously and the linear beam scanned in a perpendicular direction to gain range information in the other dimension.

Illumination systems of this sort often use laser systems. Laser systems may have safety implications and require complicated and relatively expensive scanning mechanisms. Lasers are also relatively high power sources.

Another type of illumination system is described in US patent 6,377,353. Here a structured light generator is described which comprises a light source arranged in front of a patterned slide which has an array of apertures therein. Light from the source only passes through the apertures and projects an array of spots onto the scene. The range information in this apparatus is determined by analysing the size and shape of the spots formed.

This type or illumination system blocks a proportion of the light generated by the source, however, and, as such, requires a relatively high power source to generate the illumination required. Further the depth of field of the illumination system is somewhat limited and discrimination is difficult at low ranges.

US patent 4,294,544 discloses a topographic measurement system for defining a remote surface which has an illuminator for illuminating the scene with an array of laser beams which are sequenced in a particular manner. The projection means described is a complicated system of shearing plates and beam steering means. The device produces a collimated array of light beams which may not be suitable for all applications and uses a high powered laser source.

WO02/40940 relates to an apparatus for determining a three-dimensional shape of an object from a two-dimensional image. A light source illuminates the object with a pattern of needle-like light beams that are directed at the object. A detector forms an image of spots of light of the object and a processor is connected to the detector for reconstructing the shape of the object from the image. The detector and the light source have a fixed position in relation to one another, and a mask having an aperture pattern is placed between the light source and the object for the formation of light beams.

It is therefore an object of the invention to provide a structured light source that mitigates at least some of the above-mentioned disadvantages. As used in this specification the term structured light generator shall be taken to mean a source which projects a plurality of distinct areas of light towards a scene.

Therefore, according to first aspect of the present invention there is provided a structured light generator according to claim 1. In a second aspect of the present invention there is provided a structured light generator according to claim 2.

The light guide in effect operates as a kaleidoscope. Light from the source is reflected from the sides of the tube and can undergo a number of reflection paths within the tube. The result is that multiple images of the light source are produced and projected onto the scene. Thus the scene is illuminated with an array of images of the light source. Where the source is a simple light-emitting diode the scene is therefore illuminated with an array of spots of light. The structured light generator of the present invention is advantageous in that it offers a large depth of field. The depth of field of the generator will obviously determine the range over which the generator can be effectively used and a large depth of field means that the device has a larger effective range of operation. This is especially useful when used as an illumination source in ranging applications as it allows the same apparatus to be used to determine the range to relatively nearby objects as well as distant objects. It also allows operation in a scene having a large possible variation of range in the scene. Furthermore the image replication occurring within the light guide means that images of the light source are projected evenly across a very wide angle. In other words the array of spots projected onto the scene is not limited in angle as some prior art devices are which again is very useful in ranging applications where a wide field of view to relatively distant objects may be required.

The light guide comprises a tube with substantially reflective walls and has a constant cross-section which is conveniently a regular polygon. Having a regular cross section means that the array of images of the light source will also be regular which is advantageous for ranging applications. A regular array of images ensures that the scene is illuminated in a known manner and will ease discrimination of images for ranging purposes. A square section tube is most preferred.

The tube may comprise a hollow tube having reflective internal surfaces, i.e. mirrored internal walls. Alternatively the tube may be fabricated from a solid material and arranged such that a substantial amount of light incident at an interface between the material of the tube and surrounding material undergoes total internal reflection. The tube material may be either coated in a coating with a suitable refractive index or designed to operate in air, in which case the refractive index of the light guide material should be such that total internal reflection occurs at the material-air interface.

Using a tube like this as a light guide results in multiple images of the light source being generated which can be projected to the scene across a wide angle. The light guide is easy to manufacture and assemble and couples the majority of the light from the sources to the scene. Thus low power sources such as light emitting diodes can be used. As the exit aperture of the light guide is generally small the apparatus also has a large depth of field which, as mentioned, makes it useful for ranging applications which require the projection of images that are separated over a wide range of distances. Typically, the light guide has a cross-sectional area in the range of a few square millimetres to a few tens of square millimetres, for instance the cross sectional area may be in the range of 1 - 50mm² or 2 - 25mm². As mentioned the light guide preferably has a regular shaped cross-section with a longest dimension of a few millimetres, say 1 - 5mm. One embodiment as mentioned is a square section tube having a side length of 2-3mm. The light guide may have a length of a few tens of millimetres; a light guide may be between 10 and 70mm long. Such light guides can generate a grid of images is over an angle of 50-100 degrees (typically about twice the total internal angle within the light guide). Other arrangements of the light guide may be suitable for certain applications however.

The projection optics may comprise a projection lens. The projection lens may be located adjacent the output face of the light guide. In some embodiments where the light guide is solid the lens may be integral to the light guide, i.e. the tube may be shaped at the output face to form a lens.

All beams of light projected by the apparatus according to the present invention pass through the end of the light guide and can be thought of as originating from the point at the centre of the end face of the light guide. The projection optics can then comprise a hemispherical lens and if the centre of the hemisphere coincides with the centre of the light guide output face the apparent origin of the beams remains at the same point, i.e. each projected image has a common projection origin. In this arrangement the projector does not have an axis as such as it can bo thought of as a source of beams radiating across a wide angle which is very useful for ranging applications. Other projection optics could be used, however, for different effects.

Preferably the projection optics are adapted so as to sharply focus the projected array at a relatively large distance. This provides a sharper image at that distance and a blurred image at closer distances. The amount of blurring can give some coarse range information which can be useful for ranging applications. The discrimination is improved if the light source or transmissive portion of the mask, respectively, has a non-circular shape.

For ranging applications it is necessary for the rangle detector to be able to detect an image in the scene and know unambiguously what image in the projected array it corresponds to. Providing coarse range information in the focussing can help remove some ambiguity. Therefore the projection optics are preferably adapted to provide a substantially focussed image at a first distance and a substantially unfocussed image at a second distance, the first and second distance being within the expected range of operation of the apparatus. As mentioned the first distance may be larger than the second distance.

In order to further remove ambiguity the light source may have a shape which is not symmetric about the axes of reflection of the light guide. If the light source is not symmetrical about the axis of reflection the light source will be different to its mirror image. Adjacent images in the projected array are mirror images and so shaping the light source in this manner would allow discrimination between adjacent spots.

Apparatus according to the first aspect of the invention may comprise more than one light source, each light source arranged to illuminate part of the input face of the light guide. Using more than one light source can improve the image resolution in the scene. Preferably the plurality of light sources are arranged in a regular pattern. The light sources may be arranged such that different arrangements of sources can be used to provide differing image densities. For H instance a single source could be located in the centre of the input face of the light guide to provide a certain image density. A separate two-by-two array of sources could also be arranged on the input face and could be used instead of the central source to provide an increased image density.

Where a plurality of light sources are used, at least one light source could be arranged to emit light at a different wavelength to another light source. Using sources with different wavelengths means that the array of images projected into a scene will have differing wavelengths, in effect the sources and hence corresponding images will be different colours - although the skilled person will appreciate that the term colour is not meant to imply operation in the visible spectrum. Having varying colours will help remove ambiguity over which image is which in the projected array.

Alternatively at least one light source could be shaped differently from another light source, preferably at least one light source having a shape that is not symmetric about a reflection axis of the light guide. Shaping the light sources again helps discriminate between images in the array and having the shapes non symmetrical means that mirror images will be different, further improving discrimination as described above.

At least one light source could be located within the light guide, at a different depth to another light source. The angular separation of the projected array of beams emanating from a kaleidoscope is determined by the ratio of its length to its width as will be described later. Locating at least one light source within the kaleidoscope shortens the effective length of the light guide for that light source. Therefore the resulting pattern projected towards the scene will comprise more than one array of images having different periods. The degree of overlap of the images will therefore change with distance from the centre of the array which can be used to identify each image uniquely.

In the apparatus according to the first aspect of the invention the light source may be arranged to run from one side of the input face to another such that the structured light generator illuminates the scene with an array of lines. If a light source is used which is arranged to run from one side of the input face of the light guide to another in a direction orthogonal to a reflection axis the effect will be that a constant line is projected onto the scene which can be useful for some applications. In some embodiments it may be wished to illuminate the scene with intersecting lines. The points of intersection between the lines may be used for identification for ranging purposes in a similar manner to separated images as described above and for the purposes of this specification any reference to a image should be taken to include an identifiable point of illuminated light such as the intersection point between continuous lines. The points of intersection therefore can be used to locate the range to that point. That range information could then be used to allow ranging to any other point on the line, i.e. a point on the line which is not a point of intersection, allowing more detailed range information to be gathered. In some cases however it may be best to range to separate images and then activate the lines in which case the light source may be adapted to illuminate the light guide so as to produce an array of lines or an array of separate images.

In aspects of the invention in which the input face of the light guide is illuminated through a mask. The mask is arranged so that the light source only illuminates a part or parts of the input face, i.e. the mask may have at least one transmissive portion and the or each transmissive portion may be arranged to illuminate only part of the input face of the light guide. Therefore rather than use a relatively small light source arranged to illuminate only part of the input face of the light guide one or more light sources could be used to illuminate a mask. The mask would only allow light through to part of the input face of the light guide and so a larger light source or collection of sources could be used. The mask may have more than one transmissive portion so that a single light source could illuminate separate parts of the input face of the light guide. Therefore several distinct areas of light could be generated on the input face of the light guide using only one source or possibly a small array of sources.

Using a mask in this fashion requires the mask to be accurately located at the input face of the light guide. This is easier than requiring accurate location of a light source or light source array, and may be achieved by printing or otherwise processing the end of the kaleidoscope. The positioning of the light source or sources is then less critical as it is only necessary for them to be arranged to illuminate the mask.

The transmissive portion or portions of the mask may have a distinct non-circular shape. As mentioned above, projecting an area with a distinct non-circular shape can H &pe4L help give range information if it is sharply focussed at one range and unfocussed at another. Similarly if the mask has several transmissive portions to illuminate several different areas of the input face of the light guide at least some could have different shapes to aid area identification in a ranging system. Shaping the transmissive portions of an input mask is generally easier than providing shaped light sources. Additionally or alternatively the mask may comprise different transmissive portions at least some of which are transmissive at different wavelengths. In other words the mask may have a plurality of windows each operating as a different colour filter. When the mask is illuminated with a white light source different parts of the input face will be illuminated with different colour spots which will be replicated and projected towards the scene. Of course the invention is not limited to visible wavelengths and the term colour should be construed accordingly. The mask may also have a transmissive portion arranged to run from one side of the input face of the light guide to another so as to allow the light source to illuminate the input face of the light guide with at least one line. This will result in the structured light generator projecting an array on lines onto the scene. In some embodiments the mask may be arranged such that an array of intersecting lines is projected with the same advantages as described above with respect to a continuous light source.

The mask may comprise a modulator, such as an electro-optic modulator. Using a modulator to form at least part of the mask could allow control of the transmission characteristics of certain portions of the mask which in turn controls the illumination to the input face of the light guide. For instance certain windows or transmissive portions could be switched from transmissive to non-transmissive to turn certain areas in the array off and vice versa. Accordingly the term transmissive portion should not be read as being limited to a portion which is always transmissive, merely one that is capable of being transmissive at at least one wavelength of operation. As an alternative the wavelength of transmission of a window in the mask could be changed so that the colour of certain areas in the affray may lie changed. As mentioned above when used in ranging applications it may be necessary to alter the characteristics of some areas in the array so as to permit unique identification of the areas observed in the scene to resolve any range ambiguities.

To ensure uniform illumination of the mask, a homogeniser is preferably provided between the light source or sources and the mask. The homogeniser may comprise a simple light pipe such as a plastic light pipe for providing uniform illumination. Although not mentioned explicitly in the appended claims, the non transmissive parts of the mask may be reflective so that light which is not transmitted may be reflected back from the mask to be used again. Re-circulating the non-transmitted light in this way helps reduce the brightness of the light source or sources needed reducing the power requirements

Although not mentioned explicitly in the appended claims, the structured light generator may conveniently comprise a controllable means of redirecting the direction of the projected radiation. In some applications it may be desired to redirect the projected array of light. For instance higher resolution range information could be acquired by redirecting the projected array between captured frames so as to project the spots onto different parts of the scene allowing more range points to be calculated. Conveniently the means of redirecting the radiation comprises a refractive element which may rotated so as to redirect the projected array to a different part of the scene. For instance the redirection means may comprise refractive wedge which is mounted for rotation about an axis and is adapted to refract radiation away from that axis.

As mentioned the present invention is particularly suitable for illuminating a scene with structured light so that an imaging based ranging system can determine the range
to points in the image.

The invention will now be described by way of example only with reference to the following drawings of which;
Figure 1 shows a structured light generator according to the present invention,
Figure 2 illustrates how the structured light generator projects multiple images,
Figure 3 shows another embodiment of a structured light generator according to the present invention,
Figure 4 shows the input face of a light guide of the structured light generator of the present invention having a plurality of light sources,
Figure 5 shows the input face of a light guide of the structured light generator of the present invention having a plurality of shaped light sources and part of the pattern projected toward the scene,
Figure 6 shows a structured light generator having two light sources arranged at different depths and a part of the pattern projected towards the scene,
Figure 7 shows the output pattern of a structured light generator arranged to illuminate the scene with a plurality of lines,
Figure 8 illustrates the input face and output pattern of a structured light generator arranged to illuminate the scene with an array of intersecting lines, and
Figure 9 shows a structured light generator according to another aspect of the invention

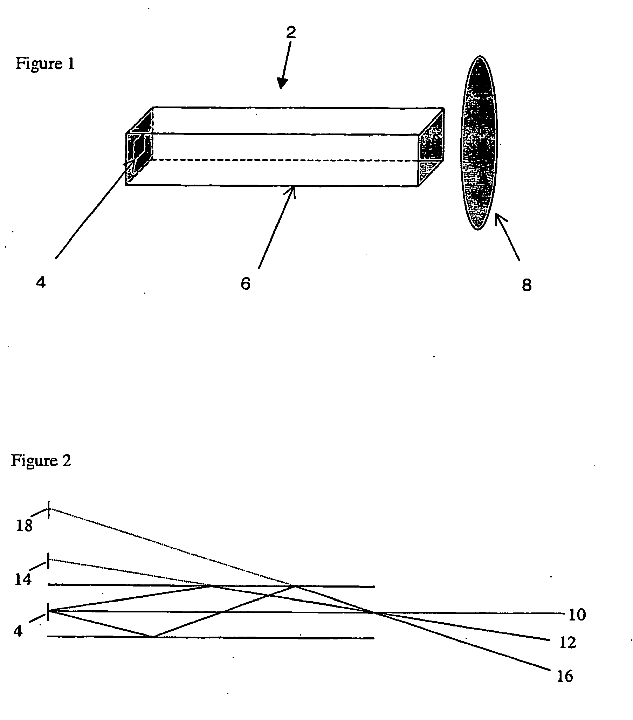

A structured light generator generally indicated 2 according to the present invention is shown in figure 1. A light source 4 is located adjacent an input face of a kaleidoscope 6. At the other end is located a simple projection lens 8. The projection lens is shown spaced from the kaleidoscope for the purposes of clarity but would generally be located adjacent the output face of the kaleidoscope.

The light source 4 is an infrared-emitting light-emitting diode (LED). Infrared is useful for ranging applications as the array of projected images need not interfere with a H visual image being acquired and infrared LEDs and detectors are reasonably inexpensive. However the skilled person would appreciate that other wavelengths and other light sources could be used for other applications without departing from the scope of the invention.

The kaleidoscope is a hollow tube with internally reflective walls. The kaleidoscope could be made from any material with suitable rigidity and the internal walls coated with suitable dielectric coatings. However the skilled person would appreciate that the kaleidoscope could comprise a solid bar. Any material which is transparent at the wavelength of operation of the LED would suffice, such as clear optical glass. The material would need to be arranged such that at the interface between the kaleidoscope and the surrounding air the light is totally internally reflected within the kaleidoscope. This may be achieved using additional (silvering) coatings, particularly in regions that may be cemented with potentially index-matching cements/epoxies etc. Where high projection angles are required this could require the kaleidoscope material to be cladded in a reflective material. An ideal kaleidoscope would have perfectly rectilinear walls with 100% reflectivity. It should be noted that a hollow kaleidoscope may not have an input or output face as such but the entrance and exit to the hollow kaleidoscope should be regarded as the face for the purposes of this specification.

The effect of the kaleidoscope tube is such that multiple images of the LED can be seen at the output end of the kaleidoscope. The principle is illustrated with reference to figure 2. Light from the LED 4 may be transmitted directly along the kaleidoscope undergoing no reflection at all - path 10. Some light however will be reflected once and will follow path 12. Viewed from the end of the kaleidoscope this will result in a virtual source 14 being seen. Light undergoing two reflections would travel along path 16 resulting in another virtual source 18 being observed.

The dimensions of the device are tailored to the intended application. Imagine that the LED 4 emits light into a cone with a full angle of 90°. The number of images viewed on either side of the central, unreflected, image will be equal to the kaleidoscope length divided by its width. The ratio of image separation to size determined by the ratio of kaleidoscope width to LED size. Thus a 200µm wide LED and a kaleidoscope 30mm long by 1mm square will produce a square grid of 61 images on a side separated by five times their width (when focussed). As the effective exit aperture is low at 1mm square the device has a large depth of field making it particularly suited to ranging-based applications. The above-described kaleidoscope may have a depth of field from 100mm to infinity. Other kaleidoscope dimensions will be used for other applications. A square section kaleidoscope of 2-3mm square may be used with a length of, say, 20 - 50mm to generate various image densities.

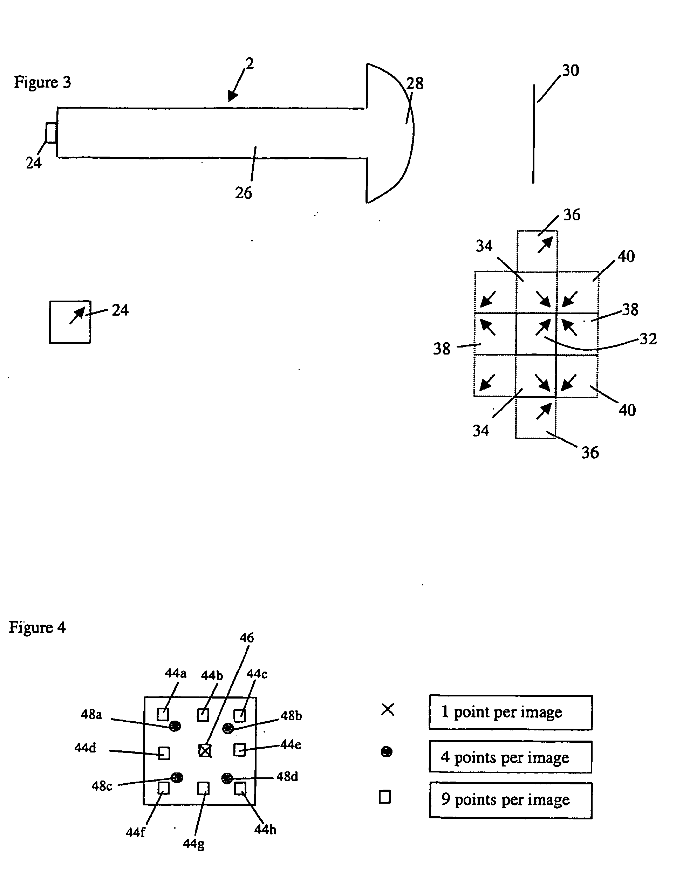

Projection lens 8 is a simple singlet lens arranged at the end of the kaleidoscope and is chosen so as to project the array of images of the LED 4 onto the scene. The projection geometry again can be chosen according to the application and the depth of field required but a simple geometry is to place the array of spots at or close to the focal plane of the lens. A useful feature of the projector arrangement according to the present invention is that, as shown in figure 2, all the beams pass through the end of the kaleidoscope and can be thought of as originating from the centre of the output face of the kaleidoscope. Projection optics may therefore comprise ha hemispherical lens and STET if arranged with its axis coincident with the centre of the exit face will preserve the apparent origin of the beams. Figure 3 shows a hemispherical lens 28 formed integrally with the kaleidoscope 26. Thus the projector according to the present invention is advantageous in projecting images of the input face of the kaleidoscope across a wide angle and effectively has no axis to speak of, unlike prior art projection systems.

For some ranging applications it is advantageous that the images are sharply focussed at one likely range and less focussed at another likely range. Where a structured light generator according to the first aspect of the present invention is used for ranging applications the scene is illuminated with a projected array of images. A detector arranged to determine the location of images in the scene can then work out the angle and hence range to that image but only if it can determine exactly which image is which. Determination of whether on image were focussed or not would give a rough indication of range and hence remove some ambiguity about which image was being considered. This discrimination can be improved if the LED is a particular shape, such as square so that an in-focus image is also square. An unfocussed image would be more circular in shape.

In one embodiment of the invention the light source is shaped so as to allow discrimination between adjacent images. Where the light source is symmetric about the appropriate axes of reflection the images produced by the system are effectively identical. However where a non-symmetrically-shaped source is used adjacent images will be distinguishable mirror images of each other. The principle is illustrated in figure 3.

The structured light generator 2 comprises a solid tube of clear optical glass 26 having a square cross section. A shaped LED 24 is located at one face. The other end of tube 26 is shaped into a projection lens 28. As mentioned above kaleidoscope 26 and lens 28 are therefore integral which increases optical efficiency and eases manufacturing as a single moulding step may be used. Alternatively a separate lens could be optically cemented to the end of a solid kaleidoscope with a plane output face.

For the purposes of illustration LED 24 is shown as an arrow pointing to one corner of the kaleidoscope, top right in this illustration. The image formed on a screen 30 is shown. A central image 32 of the LED is formed corresponding to an unreflected spot and again has the arrow pointing to the top right. Note that in actual fact a simple projection lens will project an inverted image and so the images formed would actually be inverted. However the images are shown not inverted for the purposes of explanation. The images 34 above and below the central spot have been once reflected and therefore are a mirror image about the x-axis, i.e. the arrow points to the bottom right. The next images 36 above or below however have been twice reflected about the x-axis and so are identical to the centre image. Similarly the images 38 to the left and right of the centre image have been once reflected with regard to the y-axis and so the arrow appears to point to the top left. The images 40 diagonally adjacent the centre spot have been reflected once about the x-axis and once about the y-axis and so the arrow appears to point to the bottom left. Thus the orientation of the arrow in the detected image gives an indication of which image is being detected. This technique allows discrimination between adjacent images but not subsequent

Additionally or alternatively more than one light source could be used. The light sources could be used to give variable resolution in terms of image density in the scene, or could be used to aid discrimination between images, or both.

For example if more than one LED were used and each LED was a different colour the pattern projected towards the scene would have different coloured images therein. The skilled person would appreciate that the term colour as used herein does not necessarily mean different wavelengths in the visible spectrum but merely that the LEDs have distinguishable wavelengths.

The arrangement of LEDs on the input face of the kaleidoscope effects the array of images projected and a regular arrangement is preferred. To provide a regular array the LEDs should be regularly spaced from each other and the distance from the LED to the edge of the kaleidoscope should be half the separation between LEDs.

Figure 4 shows an arrangement of LEDs that can be used to give differing image densities. Thirteen LEDs are arranged on the input face 42 of a square section kaleidoscope. Nine of the LEDs, 46 & 44a - h, are arranged in a regular 3x3 square grid pattern with the middle LED 46 centred in the middle of the input face. The remaining four LEDs, 48a - d are arranged as they would be to give a regular 2x2 grid. The structured light generator can then be operated in three different modes. Either the central LED 46 could be operated on its own - this would project a regular array of images as described above - or multiple LEDs could be operated. For instance, the four LEDs 48a-d arranged in the 2x2 arrangement could be illuminated to give an array with four times as many images produced than with the centre LED 46 alone.

The different LED arrangements could be used at different ranges. When used to illuminate scenes where the targets are at close range the single LED may generate a sufficient number of images for discrimination. At intermediate or longer ranges however the image density may drop below an acceptable level, in which case either the 2x2 or 3x3 array could be used to increase the image density. As mentioned the LEDs could be different colours to improve discrimination between different image.

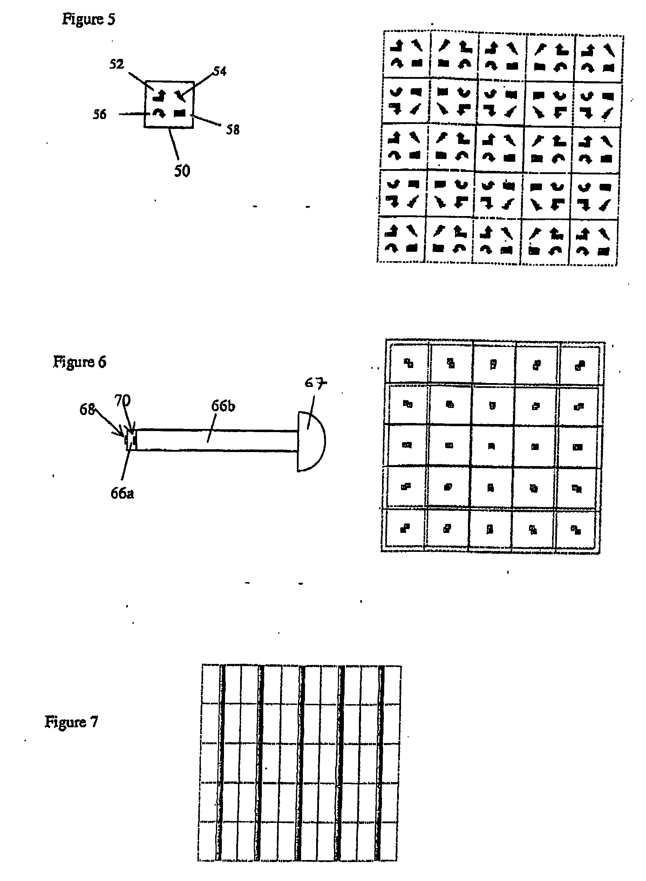

Where multiple sources are used an appropriate choice of shape or colour of the sources can give further discrimination. This is illustrated with respect to figure 5. Here a 2x2 array of differently shaped sources, 52, 54, 56, 58 is illustrated along with a portion of the pattern produced. One can think of the resultant pattern formed as a tiled array of images of the input face 50 of the kaleidoscope with each adjacent tile being a mirror image of its neighbour about the appropriate axis. Looking just in the x-axis then the array will be built up by images corresponding to LEDs 52 and 54 and followed by images corresponding to their minor images. The resultant pattern means that each image is different from its next three nearest neighbours in each direction and ambiguity over which image is being observed by a detector would be reduced.

Where multiple sources are used the sources may be arranged to be switched on and off independently to further aid in discrimination. For instance several LEDs could be used, arranged as described above, with each LED being activated in turn. Alternatively the array could generally operate with all LEDs illuminated but in response to a control signal from a detector which suggests some ambiguity could be used to activate or deactivate some LEDs accordingly.

In a further embodiment light sources are arranged at different depths within the kaleidoscope. The angular separation of adjacent beams from the kaleidoscope depends upon the ratio between the length and width of the kaleidoscope as discussed above. Figure 6 shows a square section kaleidoscope 66 and projection lens 67. The kaleidoscope tube 66 is formed from two pieces of material 66a and 66b which may be clear optical glass or any other suitable material. A first LED 68 is located at the input face of the kaleidoscope as discussed above. A second LED 70 is located at a different depth within the kaleidoscope, between the two sections 66a and 66b of the kaleidoscope. The skilled person would be well aware of how to join the two sections 66a and 66b of kaleidoscope to ensure maximum efficiency and locate the second LED 70 between the two sections.

The resulting pattern contains two grids with different periods with the grid corresponding to the second LED 70 partially obscuring the grid corresponding to the first LED 68. As can be seen the degree of separation between the two images varies with distance from the centre image. The degree of separation or offset of the two grids could then be used to identify the images uniquely. The LEDs 68, 70 could be different colours as described above to improve discrimination.

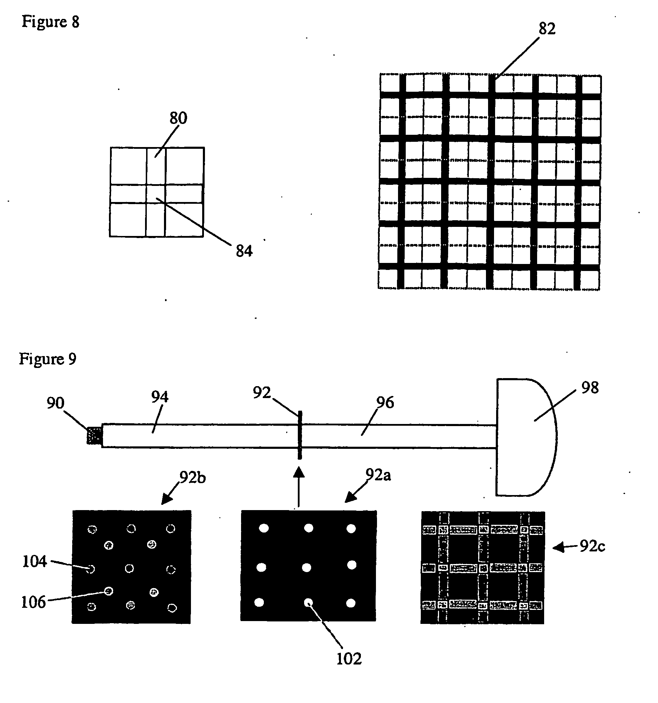

Up until now the invention has been described with reference to producing discrete images. The invention could be used to project continuous lines onto the scene however. A light source comprising a strip running from one side of the input face to the other and located centrally would produce an array of continuous lines as shown in figure 7. Similarly a square grid could be produced by use of a cross-shaped light source as shown in figure 8.

Referring to figure 8 a cross-shaped LED 80 is arranged on the input face of the kaleidoscope. This results in the pattern of intersecting lines 82 shown being projected towards the scene. The points of intersection of the lines in the output pattern can be seen as separately identifiable images. A detector could detect a point of intersection in the same way as it could detect a distinct image as described above. However a detector having located the range to a point of intersection could then also determine range information to any other point along the intersecting line. Therefore in some applications projecting a grid of intersecting lines can be advantageous in that the resolution of the ranging apparatus could be increased. Identification of a point of intersection may be less easy than identification of a unique image, however. In which case, the cross-shaped LED could comprise a separate central portion 84 which is independently operable. Activation of just the central portion 84 would result in an array of distinct images being produced as described with reference to figures 1 and 2. Once the range to each image had been determined the rest of LED 80 could be activated to provide additional detail for ranging.

Figure 9 shows the second aspect of the invention wherein instead of locating the LEDs on the input face of the light guide a mask is arranged on the input face. The structured light generator has a square section kaleidoscope 96 and projection lens 98 such as described with reference to figure 6 above although an integral arrangement such as shown in figure 3 could be used as well. A mask 92 is arranged at the input face to the kaleidoscope 96 which is illuminated by LED 90 through light pipe 94. The LED 90, which may instead be replaced by an array of LEDs or other light sources, illuminates the light pipe 94 with a relatively broad wavelength range, i.e. it may be a white light source. The light pipe 94 acts as a homogeniser and ensures that the mask 92 receives uniform illumination. The mask 92 is provided with a plurality of transmissive portions so that only a part of the input face of the kaleidoscope is illuminated. The transmissive portions of the mask 92 therefore illuminate the input face of the light guide in a similar manner to the individual LEDs of the embodiments described with reference to figures 1 to 8 and all of the above mentioned advantages are therefore applicable to this aspect of the invention.

The mask 92 may have different arrangements of transmissive windows according to the application for which the structured light generator is being used. For instance in the simplest form (not shown) the mask may comprise simply a central aperture allowing a spot to be formed at the central of the input face of the kaleidoscope effectively reproducing the system shown in Figure 1. An alternative mask shown as 92a could have a greater density of regularly spaced apertures 102 allowing for higher spot densities. Using a mask such as mask 92a allows a high density of spots to be input to the kaleidoscope but without requiring the use of very small LEDs. The manufacture of mask 92a is relatively easy and accurate alignment of mask 92 is easier than the alignment of an array of LEDs. LED 90 does not need as accurate H alignment as the mask (or were it located at the input face of the kaleidoscope without a mask). It is sufficient that it illuminates light pipe 94 and light pipe 94 uniformly illuminates the mask 92. Therefore manufacture of the aspect of the invention having a mask may be easier than the aspect without.

An alternative mask 92b is shown where different portions are formed which are transmissive at different colours. For instance windows 104 may transmit light of one wavelength, say red, whilst windows 106 may transmit light of a different wavelength, say green (although the invention is applicable to wavelengths outside the visible spectrum). This would produce an array of differently coloured areas which could aid area identification as described above. The different windows 104, 106 could be made by using different filter materials as would be readily understood by one skilled in the art. Further, single LED 90 could be replaced by two LEDs operating at different wavelengths, say a red LED and a green LED such that each of the two different windows 104, 106 transmits radiation emitted by one LED only. Therefore with both LEDs activated a high density array of different coloured areas is projected. However were just one LED activated, say the red LED, only one set of windows would be transmissive, i.e windows 104, and only a limited array of areas would be projected. This could be extended to a greater number of wavelengths.

Mask 92c shows a mask allowing a plurality of intersecting lines to be projected on to the input face of the kaleidoscope. This would produce a pattern similar to that shown in Figure 8.

Mask 92 could be a fixed mask or the mask could comprise an electro-optical modulator such as a shutter. Individual windows in the mask could then be switched from being transmissive to non-transmissive so as to deactivate certain areas in the scene.

The light pipe 94 serves simply to guide light from the LED 90 to the mask 92 and as such can be a relatively cheap and low-accuracy component, reducing system costs. The non-transmissive portions of the input face of mask 92, i.e. the face receiving the light from the light pipe 94, are reflective such that non-transmitted light is reflected back into the light pipe 94 where it will reflect from the LED end of the light pipe and then be re-incident on the mask 92. As the spot diameter to spacing ratio is typically about 4:1 the transmissive portion of the mask is only around one sixteenth of its area. Re-circulating the non-transmitted light increases the efficiency of the device reducing the power requirement for the LEDs.

## Claims

1. A structured light generator for illuminating a scene, wherein the structured light generator is adapted to be used with a range finding apparatus and comprises a light source arranged to illuminate part of an input face of a light guide, the light guide comprising a constant cross section tube having substantially reflective sides and being arranged together with projection optics so as to project an array of distinct images of the light source towards the scene.

2. A structured light generator for illuminating a scene, wherein the structured light generator is adapted to be used with a range finding appartus and comprises at least one light source arranged to illuminate part of an input face of a light guide through a mask, wherein the mask has at least one transmissive portion, the or each transmissive portion being arranged to illuminate only part of the input face of the light guide, the light guide comprising a constant cross section tube having substantially reflective sides and being arranged together with projection optics so as to project an array comprising a plurality of distinct areas of light towards the scene,

3. A structured light generator as claimed in claim 1 or claim 2 wherein the cross section of the tube is a regular polygon.

4. A structured light generator as claimed in claim 3 wherein the tube has a square cross section.

5. A structured light generator as claimed in any preceding claim wherein the cross sectional area of the light guide is in the range 1 to 50mm² or 2 to 25mm².

6. A structured light generator as claimed in any preceding claim wherein the light guide comprises a hollow tube having reflective internal surfaces.

7. A structured light generator as claimed in any of claims 1 to 5 wherein the light guide comprises a tube of solid material adapted such that a substantial amount of light incident at an interface between the material of the tube and surrounding material undergoes total internal reflection.

8. A structured light generator as claimed in Claim 1 or Claim 2 wherein the light guide is between 10 and 70mm long.

9. A structured light generator as claimed in any preceding claim wherein the projection optics comprises a projection lens.

10. A structured light generator as claimed in claim 9 when dependent upon claim 7 wherein the tube of solid material is shaped at an output face of the light guide to form the projection lens.

11. A structured light generator as claimed in any preceding claim wherein the projection optics comprise a hemispherical lens arranged such that: the centre of the hemispherical lens is located at the centre of the output face of the light guide such that the apparent origin of beams of light radiated across a wide angle by the structured light generator remains at the same point.

12. A structured light generator as claimed in any preceding claim wherein the array of images or areas projected towards the scene have a common point of origin.

13. A structured light generator as claimed in any preceding claim wherein the depth of field of the structured light generator determines an effective range of operation, and wherein the projection optics are adapted to provide a substantially focussed image or area at a first distance and a substantially unfocussed image or area at a second distance, the first and second distance being within the effective range of operation of the apparatus.

14. A structured light generator as claimed in claim 13 wherein the first distance may be larger than the second distance.

15. A structured light generator as claimed in claim 1 or any claim as it depends therefrom wherein the light source has a non-circular sbape.

16. A structured light generator as claimed in claim 15 wherein the light source shape is not symmetric about the axes of reflection of the light guide.

17. A structured light generator as claimed in claim-1 or any claim as it depends therefrom comprising more than one light source, each light source arranged to illuminate part of the input face of the light guide.

18. A structured light generator as claimed in claim 17 wherein the light sources are arranged in a regular pattern.

19. A structured light generator as claimed in any of claims 17 to 18 wherein at least one of said more than one light source emits light at a different wavelength to another one of said more than one light source.

20. A structured light generator as claimed in any of claims 17 to 19 wherein at least one of said more than one_light source is shaped differently from another one of said more than one light source.

21. A structured light generator as claimed in any of claims 17 to 20 wherein at least one of said more than one light source has a shape that is not symmetric about a reflection axis of the light guide.

22. A structured light generator as claimed in any of claims 18 to 21 wherein at least one of said more than one light source is located within the light guide, at a different depth to another one of said more than one light source.

23. A structured light generator as claimed in claim 1 or any preceding claim as it depends from claim 1 wherein the light source is arranged to run from one side of the input face of the light guide to another such that the structured light generator illuminates the scene with an array of lines.

24. A structured light generator as claimed in claim 23 wherein the light source is arranged relative to the light guide so as to illuminate the scene with intersecting lines.

25. A structured light generator as claimed in claim 2 or any claim as it depends from claim 2 wherein the or at least one of the transmissive portions of the mask has a non-circular shape.

26. A structured light generator as claimed in claim 25 wherein the mask has a plurality of transmissive portions and at least some of the transmissive portions have different shapes.

27. A structured light generator as claimed in claim 2 or any claim as it depends from claim 2 wherein the mask has a plurality of transmissive portions and at least some transmissive portions are transmissive at different wavelengths.

28. A structured light generator as claimed in claim 2 or any of claims 3 to 23 as they depend from claim 2 wherein the mask bas at least one transmissive portion arranged to run from one side of the input face of the light guide to another such that the structured light generator illuminates the scene with an array of lines.

29. A structured light generator as claimed claim 2 or any claim as it depends from claim 2 wherein the mask comprises a modulator adapted such that the transmission characteristics of at least part of the mask may be varied.

30. A structured light generator as claimed in claim 2 or any claim as it depends from claim 2 further comprising a homogeniser disposed between the light source and the mask.

31. A structured light generator as claimed in any preceding claim arranged to project the array over an angle of between 50° to 100°.

32. A structured light generator as claimed in any preceding claim wherein the stuctured light generator has a depth of field from 100mm to infinity.

## Patentansprüche

1. Strukturierter Lichtgenerator zum Beleuchten eines Schauplatzes, wobei der strukturierte Lichtgenerator zur Verwendung mit einer Entfernungsmessvorrichtung ausgebildet ist und eine zur Beleuchtung eines Teils einer Eingangsseite eines Lichtleiters angeordnete Lichtquelle aufweist, wobei der ein Rohr mit konstantem Querschnitt umfassende Lichtleiter im Wesentlichen reflektierende Seiten aufweist und zusammen mit einer Projektionsoptik so angeordnet ist, dass eine Anordnung von einzelnen Bildern der Lichtquelle auf den Schauplatz projiziert wird.

2. Strukturierter Lichtgenerator zum Beleuchten eines Schauplatzes, wobei der strukturierte Lichtgenerator zur Verwendung mit einer Entfernungsmessvorrichtung ausgebildet ist und zumindest eine zur Beleuchtung eines Teils einer Eingangsseite eines Lichtleiters durch eine Maske hindurch angeordnet Lichtquelle aufweist, wobei die Maske zumindest einen durchlässigen Bereich aufweist und wobei der oder jeder durchlässige Bereich zur Beleuchtung von nur einem Teil der Eingangsseite des Lichtleiters angeordnet ist, wobei der ein Rohr mit konstantem Querschnitt umfassende Lichtleiter im Wesentlichen reflektierende Seiten aufweist und zusammen mit einer Projektionsoptik so angeordnet ist, dass eine mehrere einzelne Lichtbereiche umfassende Anordnung auf den Schauplatz projiziert wird.

3. Strukturierter Lichtgenerator wie in Anspruch 1 oder in Anspruch 2 beansprucht, wobei der Querschnitt des Rohrs ein regelmäßiges Vieleck ist.

4. Strukturierter Lichtgenerator wie in Anspruch 3 beansprucht, wobei das Rohr einen quadratischen Querschnitt aufweist.

5. Strukturierter Lichtgenerator wie in einem der vorhergehenden Ansprüche beansprucht, wobei die Querschnittsfläche des Lichtleiters im Bereich von 1 bis 50 mm² oder 2 bis 25 mm² liegt,

6. Strukturierter Lichtgenerator wie in einem der vorhergehenden Ansprüche beansprucht, wobei der Lichtleiter ein Hohlrohr mit reflektierenden inneren Oberfächen aufweist.

7. Strukturierter Lichtgenerator wie in einem der Ansprüche 1 bis 5 beansprucht, wobei der Lichtleiter ein Vollmaterialrohr umfasst, das so ausgebildet ist, dass ein wesentlicher Anteil eines auf eine Grenzschicht zwischen dem Rohrmaterial und dem umgebenden Material auftreffendes Lichtes eine innere Totalreflexion erfährt.

8. Strukturierter Lichtgenerator wie in Anspruch 1 oder in Anspruch 2 beansprucht, wobei der Lichtleiter zwischen 10 und 70 mm lang ist.

9. Strukturierter Lichtgenerator wie in einem der vorergehenden Ansprüche beansprucht, wobei die Projektionsoptik eine Projektionslinse umfasst.

10. Strukturierter Lichtgenerator wie in Anspruch 9 soweit von Anspruch 7 abhängig beansprucht, wobei das Vollmaterialrohr an einer Ausgangsseite des Lichtleiters zur Ausbildung einer Projektionslinse geformt ist.

11. Strukturierter Lichtgenerator wie in einem der vorhergehenden Ansprüche beansprucht, wobei die Projektionsoptik eine hemisphärische Linse aufweist, die so ausgebildet ist, dass das Zentrum der hemisphärischen Linse im Zentrum der Ausgangsseite des Lichtleiters so angeordnet ist, dass der scheinbare Ursprung der von dem strukturierten Lichtgenerator über einen großen Winkel ausgestrahlten Lichtstrahlen am gleichen Punkt bleibt.

12. Strukturierter Lichtgenerator wie in einem der vorhergehenden Ansprüche beansprucht, wobei die auf den Schauplatz projizierte Anordnung von Bildern oder Bereichen einen gemeinsamen Ursprungspunkt aufweist.

13. Strukturierter Lichtgenerator wie in einem der vorhergehenden Ansprüche beansprucht, wobei die Tiefenschärfe des strukturierten Lichtgenerators einen effektiven Betriebsbereich festlegt und wobei die Projektionsoptik ausgebildet ist, bei einer ersten Entfernung ein im Wesentlichen fokussiertes Bild oder einen im Wesentlichen fokussierten Bereich und bei einer zweiten Entfernung ein im Wesentlichen unfokussiertes Bild oder einen im Wesentlichen unfokussierten Bereich zu bilden, wobei die erste und die zweite Entfernung innerhalb des effektiven Betriebsbereichs der Vorrichtung liegen.

14. Strukturierter Lichtgenerator wie in Anspruch 13 beansprucht, wobei die erste Entfernung größer als die zweite Entfernung sein kann.

15. Strukturierter Lichtgenerator wie in Anspruch 1 oder davon abhängiggen Ansprüchen beansprucht, wobei die Lichtquelle eine kreisförmige Form aufweist, die nicht kreisförmig ist.

16. Strukturierter Lichtgenerator wie in Anspruch 15 beansprucht, wobei die Form der Lichtquelle eine um die Reflexionsachsen des Lichtleiters unsymmetrische Form aufweist.

17. Strukturierter Lichtgenerator wie in Anspruch 1 oder davon abhängigen Ansprüchen beansprucht, der mehr als eine Lichtquelle umfasst, wobei jede Lichtquelle so angeordnet ist, dass sie einen Teil der Eingangsseite des Lichtleiters beleuchtet.

18. Strukturierter Lichtgenerator wie in Anspruch 17 beansprucht, wobei die Lichtquellen in einem regelmäßigen Muster angeordnet sind.

19. Strukturierter Lichtgenerator wie in einem der Ansprüche 17 bis 18 beansprucht, wobei zumindest eine von den mehr als eine Lichtquellen Licht bei einer Wellenlänge emittiert, die sich von der einer anderen der mehr als eine Lichtquellen unterscheidet.

20. Strukturierter Lichtgenerator wie in einem der Ansprüche 17 bis 19 beansprucht, wobei zumindest eine der mehr als eine Lichtquellen anders als eine andere der mehr als eine Lichtquellen geformt ist.

21. Strukturierter Lichtgenerator wie in einem der Ansprüche 17 bis 20 beansprucht, wobei zumindest eine der mehr als eine Lichtquellen eine um eine Reflexionsachse des Lichtleiters nicht symmetrische Form aufweist.

22. Strukturierter Lichtgenerator wie in einem der Ansprüche 18 bis 21 beansprucht, wobei zumindest eine der mehr als eine Lichtquellen an einer anderen Tiefe innerhalb des Lichtleiters als eine andere der mehr als eine Lichtquellen angeordnet ist.

23. Strukturierter Lichtgenerator wie in Anspruch 1, oder in vorhergehenden von Anspruch 1 abhängigen Ansprüchen beansprucht, wobei die Lichtquelle so angeordnet ist, dass sie so von einer Seite der Eingangsseite des Lichtleiters zu einer anderen verläuft, dass der strukturierte Lichtgenerator den Schauplatz mit einer Linienanordnung beleuchtet.

24. Strukturierter Lichtgenerator wie in Anspruch 23 beansprucht, wobei die Lichtquelle relativ zum Lichtleiter so angeordnet ist, dass sie den Schauplatz mit sich kreuzenden Linien beleuchtet.

25. Strukturierter Lichtgenerator wie in Anspruch 2 oder von Anspruch 2 abhängigen Ansprüchen beansprucht, wobei der oder zumindest einer der durchlässigen Bereiche der Maske eine Form aufweist, die nicht kreisförmig ist.

26. Strukturierter Lichtgenerator wie in Anspruch 25 beansprucht, wobei die Maske mehrere durchlässige Bereiche aufweist und zumindest einige der durchlässigen Bereiche unterschiedliche Formen aufweisen.

27. Strukturierter Lichtgenerator wie in Anspruch 2 oder von Anspruch 2 abhängigen Ansprüchen beansprucht, wobei die Maske mehrere durchlässige Bereiche aufweist und zumindest einige der durchlässigen Bereiche bei unterschiedlichen Wellenlängen durchlässig sind.

28. Strukturierter Lichtgenerator wie in Anspruch 2 oder einem der Ansprüche 3 bis 23 soweit abhängig von Anspruch 2 beansprucht, wobei die Maske zumindest einen durchlässigen Bereich aufweist, der so abgeordnet ist, dass er so von einer Seite der Eingangsseite des Lichtleiters zu einer anderen verläuft, dass der strukturierte Lichtgenerator den Schauplatz mit einer Linienanordnung beleuchtet.

29. Strukturierter Lichtgenerator wie in Anspruch 2 oder von Anspruch 2 abhängigen Ansprüchen beansprucht, wobei die Maske einen Modulator aufweist, der so ausgebildet ist, dass die Transmissionseigenschaften von zumindest einem Teil der Maske verändert werden können.

30. Strukturierter Lichtgenerator wie in Anspruch 2 oder von Anspruch 2 abhängigen Ansprüchen beansprucht, der ferner einen Homogenisator aufweist, der zwischen der Lichtquelle und der Maske angeordnet ist.

31. Strukturierter Lichtgenerator wie in einem der vorhergehenden Ansprüche beansprucht, der ausgebildet ist, die Anordnung über einen Winkel zwischen von 50° und 100° zu projizieren.

32. Strukturierter Lichtgenerator wie in einem, der vorhergehenden Ansprüche beansprucht, wobei der strukturierte Lichtgenerator eine Tiefenschärfe von 100 mm bis Unendlich aufweist.

## Revendications

1. Générateur de lumière structurée pour illuminer une scène, dans lequel le générateur de lumière structurée est adapté pour être utilisé avec un dispositif de télémétrie et comprend une source de lumière agencée pour illuminer une partie d'une face d'entrée d'un guide de lumière, le guide de lumière comprenant un tube de section transversale constante ayant des côtés sensiblement réfléchissants et étant agencé conjointement à une optique de projection de manière à projeter un réseau d'images distinctes de la source de lumière vers la scène.

2. Générateur de lumière structurée pour illuminer une scène, dans lequel le générateur de lumière structurée est adapté pour être utilisé avec un dispositif de télémétrie et comprend au moins une source de lumière agencée pour illuminer une partie d'une face d'entrée d'un guide de lumière à travers un masque, dans lequel le masque a au moins une portion transmissive, la ou chaque portion transmissive étant agencée pour illuminer seulement une partie de la face d'entrée du guide de lumière, le guide de lumière comprenant un tube de section transversale constante ayant des côtés sensiblement réfléchissants et étant agencé conjointement à une optique de projection de manière à projeter un réseau comprenant une pluralité de zones distinctes de lumière vers la scène.

3. Générateur de lumière structurée selon la revendication 1 ou la revendication 2, dans lequel la section transversale du tube est un polygone régulier.

4. Générateur de lumière structurée selon la revendication 3, dans lequel le tube à une section transversale carrée.

5. Générateur de lumière structurée selon l'une quelconque des revendications précédentes, dans lequel la surface de section transversale du guide de lumière est comprise entre 1 et 50 mm² ou entre 2 et 25 mm².

6. Générateur de lumière structurée selon l'une quelconque des revendications précédentes, dans lequel le guide de lumière comprend un tube creux ayant des surfaces internes réfléchissantes.

7. Générateur de lumière structurée selon l'une quelconque des revendications 1 à 5, dans lequel le guide de lumière comprend un tube de matériau solide adapté de manière qu'une quantité substantielle de lumière incidente au niveau d'une interface entre le matériau du tube et le matériau qui l'entoure subisse une réflexion interne totale.

8. Générateur de lumière structurée selon la revendication 1 ou la revendication 2, dans lequel le guide de lumière a une longueur comprise entre 10 et 70 mm.

9. Générateur de lumière structurée selon l'une quelconque des revendications précédentes, dans lequel l'optique de projection comprend une lentille de projection.

10. Générateur de lumière structurée selon la revendication 9 quand elle dépend de la revendication 7, dans lequel le tube de matériau solide est profilé au niveau d'une face de sortie du guide de lumière pour former la lentille de projection.

11. Générateur de lumière structurée selon l'une quelconque des revendications précédentes, dans lequel l'optique de projection comprend une lentille hémisphérique agencée de manière que le centre de la lentille hémisphérique soit situé au centre de la face de sortie du guide de lumière de manière que l'origine apparente de faisceaux de lumière irradiée à travers un grand angle par le générateur de lumière structurée reste sur le même point.

12. Générateur de lumière structurée selon l'une quelconque des revendications précédentes, dans lequel le réseau d'images ou de zones projeté vers la scène a un point d'origine commun.

13. Générateur de lumière structurée selon l'une quelconque des revendications précédentes, dans lequel la profondeur de champ du générateur de lumière structurée détermine une plage effective de fonctionnement, et dans lequel les optiques de projection sont adaptées pour fournir une image ou zone sensiblement focalisée à une première distance et une image ou zone sensiblement non focalisée à une deuxième distance, la première et la deuxième distance étant dans la plage effective de fonctionnement du dispositif.

14. Générateur de lumière structurée selon la revendication 13, dans lequel la première distance peut être supérieure à la deuxième distance.

15. Générateur de lumière structurée selon la revendication 1 ou n'importe quelle revendication qui dépend de celle-ci, dans lequel la source de lumière a un profil non circulaire.

16. Générateur de lumière structurée selon la revendication 15, dans lequel le profil de la source de lumière n'est pas symétrique autour des axes de réflexion du guide de lumière.

17. Générateur de lumière structurée selon la revendication 1 ou n'importe quelle revendication qui dépend de celle-ci, comprenant plus d'une source de lumière, chaque source de lumière agencée pour illuminer une partie de la face d'entrée du guide de lumière.

18. Générateur de lumière structurée selon la revendication 17, dans lequel les sources de lumière sont agencées suivant un schéma régulier.

19. Générateur de lumière structurée selon l'une quelconque des revendications 17 à 18, dans lequel au moins une desdites plus d'une source de lumière émet une lumière à une longueur d'onde différente d'une autre desdites plus d'une source de lumière.

20. Générateur de lumière structurée selon l'une quelconque des revendications 17 à à 19, dans lequel au moins une desdites plus d'une source de lumière est profilée différemment d'une autre desdites plus d'une source de lumière.

21. Générateur de lumière structurée selon l'une quelconque des revendications 17 à 20, dans lequel au moins une desdites plus d'une source de lumière a un profil qui n'est pas symétrique autour d'un axe de réflexion du guide de lumière.

22. Générateur de lumière structurée selon l'une quelconque des revendications 18 à 21, dans lequel au moins une desdites plus d'une source de lumière est positionnée à l'intérieur du guide de lumière, à une profondeur différente d'une autre desdites plus d'une source de lumière.

23. Générateur de lumière structurée selon la revendication 1 ou n'importe quelle revendication qui dépend de la revendication 1, dans lequel la source de lumière est agencée pour se déplacer d'un côté de la face d'entrée du guide de lumière à un autre de manière que le générateur de lumière structurée illumine la scène avec un réseau de lignes.

24. Générateur de lumière structurée selon la revendication 23, dans lequel la source de lumière est agencée par rapport au guide de lumière de manière à illuminer la scène avec des lignes concourantes.

25. Générateur de lumière structurée selon la revendication 2 ou n'importe quelle revendication qui dépend de la revendication 2, dans lequel la ou l'au moins une des sections transmissive du masque a un profil non circulaire.

26. Générateur de lumière structurée selon la revendication 25, dans lequel le masque a une pluralité de portions transmissives et au moins certaines des portions transmissives ont des profils différents.

27. Générateur de lumière structurée selon la revendication 2 ou n'importe quelle revendication qui dépend de la revendication 2, dans lequel le masque a une pluralité de portions transmissives et au moins certaines portions transmissives sont transmissives à des longueurs d'onde différentes.

28. Générateur de lumière structurée selon la revendication 2 ou l'une quelconque des revendications 3 à 23 qui dépendent de la revendication 2, dans lequel le masque a au moins une portion transmissive agencée pour se déplacer d'un côté de la face d'entrée du guide de lumière à un autre de manière que le générateur de lumière structurée illumine la scène avec un réseau de lignes.

29. Générateur de lumière structurée selon la revendication 2 ou n'importe quelle revendication qui dépend de la revendication 2, dans lequel le masque comprend un modulateur adapté de manière que les caractéristiques de transmission d'au moins une partie du masque puissent être modifiées.

30. Générateur de lumière structurée selon la revendication 2 ou n'importe quelle revendication qui dépend de la revendication 2, comprenant en outre un homogénéisateur disposé entre la source de lumière et le masque.

31. Générateur de lumière structurée selon l'une quelconque des revendications précédentes, agencé pour projeter le réseau sur un angle compris entre 50° et 100°.

32. Générateur de lumière structurée selon l'une quelconque des revendications précédentes, dans lequel le générateur de lumière structurée a une profondeur de champ de 100 mm à l'infini.
